# EUROPÄISCHE PATENTANMELDUNG

(11) **EP 2 017 140 A1**
(43) Veröffentlichungstag der Anmeldung: **21.01.2009**
(21) Anmeldenummer: 07013977.9
(22) Anmeldetag: 17.07.2007
(51) Int. Cl.: B60R 21/237

(54) **Luftsackmodul mit nach innen gefalteten Luftsackabschnitten**

(71) Anmelder: Delphi Technologies, Inc., Troy, Michigan 48007 (US)
(72) Erfinder: Guthke, Detlev, 58089 Hagen (DE); Maiwald, Helmut, 51515 Kürten (DE)
(74) Vertreter: Manitz, Finsterwald & Partner GbR

(57) **Zusammenfassung**

Die Erfindung betrifft ein Luftsackmodul für ein Kraftfahrzeug mit einem aufblasbaren Luftsack, der im Montagezustand zu einem Paket zusammengefaltet ist, wobei der Luftsack zwei sich gegenüberliegende Abschnitte aufweist, die zur Bildung des Pakets jeweils nach innen gefaltet sind. Die Erfindung betrifft auch ein Verfahren zum Zusammenfalten eines aufblasbaren Luftsacks eines Luftsackmoduls für ein Kraftfahrzeug zu einem Paket, bei dem zwei sich gegenüberliegende Abschnitte des Luftsacks zur Bildung des Pakets jeweils nach innen gefaltet werden.

## Beschreibung

Die Erfindung betrifft ein Luftsackmodul für ein Kraftfahrzeug mit einem aufblasbaren Luftsack, der im Montagezustand zu einem Paket zusammengefaltet ist.

Derartige Luftsackmodule sind grundsätzlich bekannt. Üblicherweise wird der Luftsack zur Bildung des Luftsackpakets als Ganzes von einem Ende, welches einem Gasgenerator zum Aufblasen des Luftsacks gegenüberliegt, her in Richtung des Gasgenerators aufgerollt oder mittels einer Z-Faltung in Richtung des Gasgenerators zusammengefaltet. Bei dieser Art des Zusammenfaltens des Luftsacks besteht grundsätzlich das Problem, dass sich bei einer Entfaltung des Luftsacks ein Teilabschnitt des Luftsacks an einer in der Umgebung des Luftsacks befindlichen und den Ausbreitungspfad des Luftsacks begrenzenden Fahrzeugkomponente, beispielsweise einen Karosserie- oder Verkleidungsabschnitt, entlang bewegt, wodurch die Entfaltung des Luftsacks beeinträchtigt werden kann und/oder Teile der Fahrzeugkomponente, z.B. Gewebe oder Schaumstoffteile, separiert werden können.

Der Erfindung liegt die Aufgabe zugrunde, ein Luftsackmodul zu schaffen, welches eine definierte Entfaltung des Luftsacks zuverlässig sicherstellt und eine unbeabsichtigte Beschädigung einer in der Umgebung des Luftsackmoduls befindlichen Fahrzeugkomponente verhindert.

Zur Lösung der Aufgabe ist ein Luftsackmodul mit den Merkmalen des Anspruchs 1 vorgesehen.

Das erfindungsgemäße Luftsackmodul für ein Kraftfahrzeug weist einen aufblasbaren Luftsack auf, der im Montagezustand zu einem Paket zusammengefaltet ist, und zeichnet sich insbesondere dadurch aus, dass der Luftsack zwei sich gegenüberliegende Luftsackabschnitte aufweist, die zur Bildung des Pakets jeweils nach innen gefaltet sind.

Erfindungsgemäß ist der Luftsack also nicht einfach von einem einem Gasgenerator gegenüberliegenden Ende her zu einem Paket aufgerollt oder zusammengefaltet, sondern er ist in zwei Abschnitte unterteilt, die zur Bildung des Luftsackpakets jeweils für sich genommen, d.h. also unabhängig voneinander, zusammengefaltet sind. Es handelt sich hierbei gewissermaßen also um eine Doppelfaltung des Luftsacks.

Dadurch, dass die beiden Luftsackabschnitte jeweils nach innen, mit anderen Worten also aufeinander zu, gefaltet sind, erfolgt die Entfaltung des Luftsacks im Auslösefall von innen nach außen, d.h. der expandierende Luftsack stülpt sich von innen nach außen. Da sich der Luftsack hierbei gewissermaßen selbst führt, erfolgt die Entfaltung des Luftsacks weitgehend unabhängig von der Umgebung des Luftsacks, d.h. der Luftsack kommt im Wesentlichen ohne äußere Führungselemente aus.

Befindet sich eine den Ausbreitungspfad des Luftsacks begrenzende Fahrzeugkomponente, z.B. ein Karosserie- und/oder ein Verkleidungsabschnitt, in der Umgebung des Luftsackmoduls, so legt sich der expandierende Luftsack nach und nach an die Fahrzeugkomponente an, ohne dass nach dem Anliegen des Luftsacks an der Fahrzeugkomponente noch eine signifikante Relativbewegung zwischen dem Luftsack und der Fahrzeugkomponente stattfindet.

Dadurch, dass ein einmal an einer in der Umgebung des Luftsackmoduls befindlichen Fahrzeugkomponente anliegender Teilabschnitt des Luftsacks sich zumindest nicht wesentlich relativ zu der Fahrzeugkomponente bewegt, ist eine Beeinträchtigung der Entfaltung des Luftsacks durch eine derartige Fahrzeugkomponente zumindest annähernd ausgeschlossen. Insbesondere ist die Gefahr, dass sich der an der Fahrzeugkomponente vorbei entfaltende Luftsack an der Fahrzeugkomponente hängen bleibt oder von dieser aufgerissen wird, minimiert.

Im Ergebnis stellt die erfindungsgemäß vorgesehene Art der Faltung des Luftsacks somit nicht nur eine schnellere, sondern auch eine besonders definierte Entfaltung des Luftsacks sicher, d.h. also eine erhöhte Reproduzierbarkeit des Entfaltungsprozesses, wodurch letztlich die Sicherheit eines durch den Luftsack zu schützenden Fahrzeuginsassens erheblich verbessert ist.

Dadurch, dass zwischen einem einmal an einer in der Umgebung des Luftsackmoduls befindlichen Fahrzeugkomponente anliegenden Teilabschnitt des sich aufblasenden Luftsacks und der Fahrzeugkomponente im Wesentlichen keine Relativbewegung mehr stattfindet, trägt die erfindungsgemäß vorgesehene Art der Faltung außerdem dazu bei, dass eine Separierung von Bestandteilen der Fahrzeugkomponente, z.B. von Schaumpartikeln, zumindest weitgehend vermieden wird.

Die erfindungsgemäß vorgesehen Faltung des Luftsacks eignet sich für Gasverteilungssysteme sowohl mit starrer Geometrie, als auch ohne starre Geometrie.

Vorteilhafte Ausbildungen der Erfindung sind den Unteransprüchen, der Beschreibung und der Zeichnung zu entnehmen.

Gemäß einer Ausführungsform des erfindungsgemäßen Luftsackmoduls ist jeder der Luftsackabschnitte zumindest teilweise nach Art einer Rollfaltung gefaltet. Alternativ kann jeder Abschnitt zumindest teilweise nach Art einer Z-Faltung gefaltet sein. Außerdem sind beliebige Mischformen dieser Faltungen möglich, beispielsweise kann der eine Abschnitt nach Art einer Rollfaltung und der andere Abschnitt nach Art einer Z-Faltung gefaltet sein oder die Abschnitte können jeweils für sich genommen teils aufgerollt und teils Z-gefaltet sein.

Je nach Anwendungsfall können die Luftsackabschnitte in einem entfalteten Vormontagezustand des Luftsacks im Wesentlichen gleich lang oder unterschiedlich lang sein.

Vorteilhafterweise sind die Luftsackabschnitte dadurch gebildet, dass ein in einem entfalteten Vormontagezustand des Luftsacks einem Gasgenerator zum Aufblasen des Luftsacks gegenüberliegender Endabschnitt des Luftsacks in den Bereich des Gasgenerators gebracht wird. Vor der eigentlichen Faltung der Luftsackabschnitte wird der Luftsack zur Bildung der Luftsackabschnitte also zunächst nach innen in Richtung des Gasgenerators umgestülpt. Als Ergebnis dieses nach innen Umstülpens des Luftsacks in Richtung des Gasgenerators liegt nur eine Lage des Luftsacks an dem Gasgenerator an, welche bei einer Zündung des Gasgenerators von diesem beaufschlagt und von diesem weggeschleudert wird, wodurch der Luftsack zu seiner Entfaltung von innen nach außen gestülpt wird. Dies trägt zu einer schnelleren Entfaltung und einer verbesserten Reproduzierbarkeit des Entfaltungsprozesses bei, letztlich also zu einem optimalen Schutz eines zu schützenden Fahrzeuginsassens.

Weiterer Gegenstand der Erfindung ist außerdem ein Verfahren mit den Merkmalen des Anspruchs 8. Durch das erfindungsgemäße Verfahren und seine vorteilhaften Ausführungsformen lassen sich die voranstehend genannten Vorteile der Erfindung in entsprechender Weise realisieren.

Nachfolgend wird die Erfindung rein beispielhaft anhand vorteilhafter Ausführungsformen unter Bezugnahme auf die beigefügte Zeichnung beschrieben. Es zeigen:
- Fig. 1: in mehreren Querschnittsansichten das Zusammenfal- ten eines Luftsacks eines erfindungsgemäßen Luft- sackmoduls gemäß einer ersten Ausführungsform;
- Fig. 2: eine Querschnittsansicht eines teilweise zusammenge- falteten Luftsacks eines erfindungsgemäßen Luftsack- moduls gemäß einer zweiten Ausführungsform;
- Fig. 3: mehrere Querschnittsansichten des Luftsacks des Luftsackmoduls von Fig. 1 bei seiner Entfaltung; und
- Fig. 4: mehrere Querschnittsansichten des Luftsacks des Luftsackmoduls von Fig. 2 bei seiner Entfaltung.

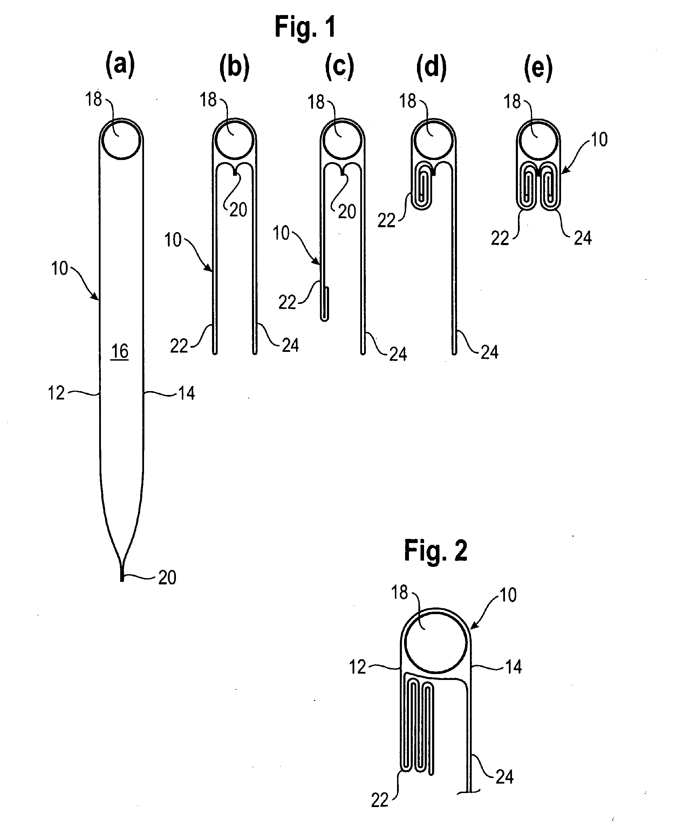

Fig. 1 zeigt in mehreren Querschnittsansichten (a) bis (e) das Zusammenfalten des Luftsacks eines erfindungsgemäßen Luftsackmoduls gemäß einer ersten Ausführungsform. Das Luftsackmodul umfasst einen Luftsack 10, der in an sich bekannter Weise aus zwei Lagen 12, 14 eines zumindest annähernd gasdichten Materials, z.B. eines Gewebematerials, gebildet ist, die zur Bildung einer abgeschlossenen Luftsackkammer 16 miteinander verbunden, z.B. vernäht, verklebt und/oder verschweißt, sind.

Das Luftsackmodul umfasst ferner einen Gasgenerator 18 zum Aufblasen des Luftsacks 10, wie er dem Fachmann hinlänglich bekannt ist. Der Gasgenerator 18 ist in einem Endbereich der Luftsackkammer 16 derart angeordnet, dass der Luftsack 10 zumindest teilweise an dem Gasgenerator 18 anliegt.

Zum Zusammenfalten des Luftsacks 10 wird ausgehend von dem in Fig. 1a gezeigten entfalteten Vormontagezustand des Luftsacks 10 zunächst ein dem Gasgenerator 18 gegenüberliegender Endabschnitt 20 des Luftsacks 10 in den Bereich des Gasgenerators 18 gebracht (Fig. 1b). Der Luftsack 10 wird von seinem dem Gasgenerator 18 gegenüberliegenden Ende her also in Richtung des Gasgenerators 18 nach innen gestülpt, und zwar vorzugsweise so weit, dass der Endabschnitt 20 des Luftsacks 10 an dem Gasgenerator 18 anliegt.

Durch das nach innen Stülpen des Luftsacks 10 werden zwei parallel zueinander verlaufende schenkelartige Luftsackabschnitte 22, 24 ausgebildet, die sich von dem Gasgenerator 18 weg erstrecken. Wie in Fig. 1b dargestellt ist, sind die Luftsackabschnitte 22, 24 im Wesentlichen gleich lang. Bei Bedarf können die Luftsackabschnitte 22, 24 aber auch mit unterschiedlichen Längen ausgebildet werden.

Die Luftsackabschnitte 22, 24 werden nun ausgehend von ihren vom Gasgenerator 18 wegweisenden Enden her jeweils nach innen und somit aufeinander zu in Richtung des Gasgenerators 18 vertikal aufgerollt (Fig. 1c und 1d), bis der Luftsack 10 zu dem in Fig. 1e gezeigten Paket zusammengefaltet ist.

Bei der Ausführungsform nach Fig. 1 erfolgt das Zusammenfalten des Luftsacks 10 also nach Art einer Doppelrollfaltung der Luftsackabschnitte 22, 24 mit gegenläufigen Drehrichtungen, da der eine Luftsackabschnitt 22 entgegen dem Uhrzeigersinn aufgerollt wird, während der andere Luftsackabschnitt 24 im Uhrzeigersinn aufgerollt wird.

Anstelle der in Fig. 1 gezeigten Rollfaltung können zum Zusammenfalten der Luftsackabschnitte 22, 24 auch andere Faltungen verwendet werden. Beispielsweise zeigt Fig. 2 eine Ausführungsform, bei welcher der eine Luftsackabschnitt 22 gemäß einer vertikalen Z-Faltung zusammengefaltet ist. Entsprechend kann auch der andere Luftsackabschnitt 24 gemäß einer Z-Faltung zusammengefaltet werden.

Alternativ ist es möglich, den einen Luftsackabschnitt 22 wie in Fig. 2 gezeigt gemäß einer Z-Faltung zusammenzufalten und den anderen Luftsackabschnitt 24 wie in Fig. 1 gezeigt aufzurollen, so dass die beiden Luftsackabschnitte 22, 24 auf unterschiedliche Arten gefaltet sind.

Darüber hinaus sind auch Kombinationen aus unterschiedlichen Faltungen an einem Luftsackabschnitt 22, 24 vorstellbar. Beispielsweise kann ein und derselbe Luftsackabschnitt 22 oder 24 zum Teil sowohl nach Art einer Rollfaltung als auch nach Art einer Z-Faltung gefaltet sein.

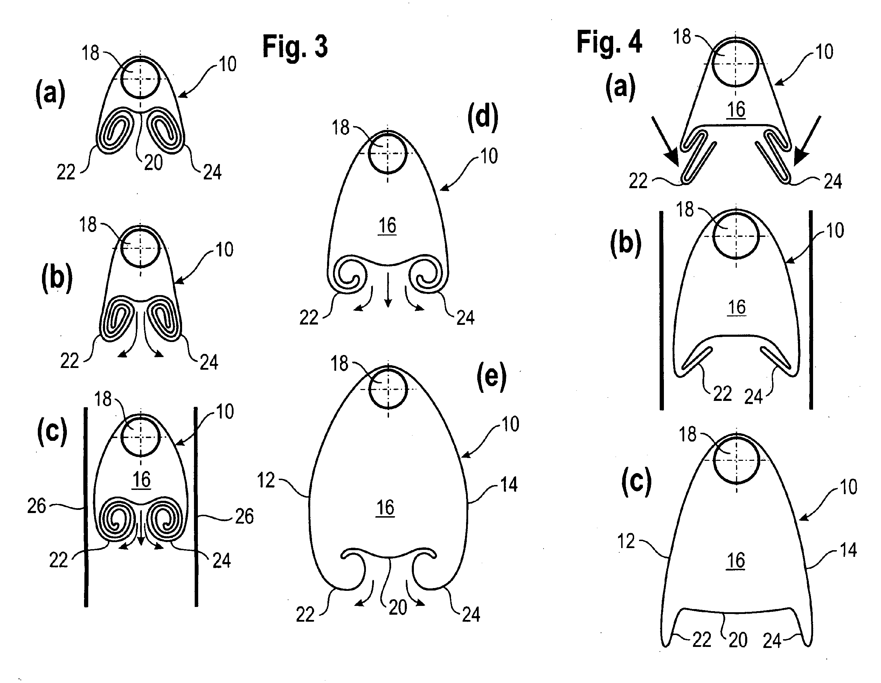

In Fig. 3 ist in mehreren Querschnittsansichten die Entfaltung des gemäß Fig. 1 zusammengefalteten Luftsackpakets dargestellt.

Bei einer Auslösung des Luftsackmoduls wird der Gasgenerator 18 gezündet, wodurch dieser unter Druck stehendes Gas freisetzt. Das durch den Gasgenerator 18 freigesetzte Gas beaufschlagt den an den Gasgenerator 18 anliegenden Endabschnitt 20 des Luftsacks 10, wodurch der Endabschnitt 20 von dem Gasgenerator 18 weggedrückt und in Sollausbreitungsrichtung des Luftsacks 10 bewegt wird.

Die Bewegung des Endabschnitts 20 bewirkt, dass sich die Luftsackabschnitte 22, 24 nach und nach aufrollen und sich der nach innen gestülpte Luftsack 10 zu seiner Entfaltung nach außen stülpt (Fig. 3a bis 3e), bis er vollständig aufgeblasen ist.

Bei ihrer Entfaltung legen sich die aufgerollten Luftsackabschnitte 22, 24 an eine gegebenenfalls in der Umgebung des Luftsackmoduls befindliche und den Ausbreitungspfad des sich aufblasenden Luftsacks 10 begrenzende Fahrzeugkomponente an, z.B. einen Karosserieabschnitt oder einen Verkleidungsabschnitt, in Fig. 3c schematisch durch Balken 26 dargestellt.

Dadurch, dass sich der Luftsack 10 bei seiner Entfaltung von innen nach außen stülpt, findet zwischen Teilabschnitten der Luftsackabschnitte 22, 24, die sich einmal an eine Fahrzeugkomponente 26 angelegt haben, zumindest keine signifikante Relativbewegung zwischen dem Teilabschnitt und der Fahrzeugkomponente 26 mehr statt, d.h. der Luftsack 10 reibt beispielsweise nicht an der Fahrzeugkomponente 26 entlang. Auf diese Weise ist eine schnelle und definierte Entfaltung des Luftsacks 10 gewährleistet.

Entsprechend Fig. 3 ist in Fig. 4 die Entfaltung eines Luftsacks 10 dargestellt, dessen Luftsackabschnitte 22, 24 wie in Fig. 2 gezeigt, nach Art einer Z-Faltung zusammengefaltet wurden. Ähnlich wie bei der in Fig. 3 gezeigten Entfaltung aufgerollter Luftsackabschnitte 22, 24 findet auch bei der in Fig. 4 dargestellten Ausführungsform allenfalls eine minimale Relativbewegung zwischen Teilabschnitten der sich entfaltenden Luftsackabschnitte 22, 24 und in der Umgebung des Luftsackmoduls gegebenenfalls befindlichen Fahrzeugkomponenten 26 statt, so dass auch bei dieser Ausführungsform eine schnelle und definierte Entfaltung des Luftsacks 10 gewährleistet ist.

### Bezugszeichenliste

- 10: Luftsack
- 12: erste Lage
- 14: zweite Lage
- 16: Luftsackkammer
- 18: Gasgenerator
- 20: Endabschnitt
- 22: Luftsackabschnitt
- 24: Luftsackabschnitt
- 26: Fahrzeugkomponente

## Patentansprüche

1. Luftsackmodul für ein Kraftfahrzeug mit einem aufblasbaren Luftsack (10), der im Montagezustand zu einem Paket zusammengefaltet ist, wobei der Luftsack (10) zwei sich gegenüberliegende Abschnitte (22, 24) aufweist, die zur Bildung des Pakets jeweils nach innen gefaltet sind.

2. Luftsackmodul nach Anspruch 1,
**dadurch gekennzeichnet, dass**
jeder Abschnitt (22, 24) zumindest teilweise nach Art einer Rollfaltung gefaltet ist.

3. Luftsackmodul nach Anspruch 1 oder 2,
**dadurch gekennzeichnet, dass**
jeder Abschnitt (22, 24) zumindest teilweise nach Art einer Z-Faltung gefaltet ist.

4. Luftsackmodul nach Anspruch 1,
**dadurch gekennzeichnet, dass**
der eine Abschnitt (22, 24) nach Art einer Rollfaltung und der andere Abschnitt (24, 22) nach Art einer Z-Faltung gefaltet ist.

5. Luftsackmodul nach einem der vorstehenden Ansprüche,
**dadurch gekennzeichnet, dass**
die Abschnitte (22, 24) in einem entfalteten Vormontagezustand des Luftsacks (10) im Wesentlichen gleich lang sind.

6. Luftsackmodul nach einem der Ansprüche 1 bis 4,
**dadurch gekennzeichnet, dass**
die Abschnitte (22, 24) in einem entfalteten Vormontagezustand des Luftsacks (10) unterschiedlich lang sind.

7. Luftsackmodul nach einem der vorstehenden Ansprüche,
**dadurch gekennzeichnet, dass**
die Abschnitte (22, 24) **dadurch** gebildet sind, dass ein in einem entfalteten Vormontagezustand des Luftsacks (10) einem Gasgenerator (18) zum Aufblasen des Luftsacks (10) gegenüber liegender Endabschnitt (20) des Luftsacks (10) in den Bereich des Gasgenerators (18) gebracht wird.

8. Verfahren zum Zusammenfalten eines aufblasbaren Luftsacks (10) eines Luftsackmoduls für ein Kraftfahrzeug zu einem Paket, bei dem zwei sich gegenüber liegende Abschnitte (22, 24) des Luftsacks (10) zur Bildung des Pakets jeweils nach innen gefaltet werden.

9. Verfahren nach Anspruch 8,
**dadurch gekennzeichnet, dass**
jeder Abschnitt (22, 24) zumindest teilweise nach Art einer Rollfaltung gefaltet wird.

10. Verfahren nach Anspruch 8 oder 9,
**dadurch gekennzeichnet, dass**
jeder Abschnitt zumindest teilweise nach Art einer Z-Faltung gefaltet wird.

11. Verfahren nach Anspruch 8,
**dadurch gekennzeichnet, dass**
der eine Abschnitt (22, 24) nach Art einer Rollfaltung und der andere Abschnitt (22, 24) nach Art einer Z-Faltung gefaltet wird.

12. Verfahren nach einem der Ansprüche 8 bis 11,
**dadurch gekennzeichnet, dass**
die Abschnitte (22, 24) ausgebildet werden, indem ein in einem entfalteten Vormontagezustand des Luftsacks (10) einem Gasgenerator (18) zum Aufblasen des Luftsacks gegenüber liegender Endabschnitt (20) des Luftsacks (10) in den Bereich des Gasgenerators (18) gebracht wird.
